(19) **Europäisches Patentamt**

**European Patent Office**

**Office européen des brevets**

(11) **EP 1 515 174 A2**

(12) **EUROPEAN PATENT APPLICATION**

(43) Date of publication:
**16.03.2005 Bulletin 2005/11**

(51) Int Cl.[7]: **G02B 21/36**

(21) Application number: **04253785.2**

(22) Date of filing: **24.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **25.06.2003 JP 2003180546**

(71) Applicant: **National Institute of Advanced Industrial Science and Technology Tsukuba, Ibaraki 305-8568 (JP)**

(72) Inventor: **Ohba, Kohtaro, Nat. Inst. of Advanced Ind.
Tsukuba-shi Ibaraki 305-8568 (JP)**

(74) Representative:
**Cross, Rupert Edward Blount et al
BOULT WADE TENNANT,
Verulam Gardens
70 Gray's Inn Road
London WC1X 8BT (GB)**

(54) **Three dimensional microscope system and image display method thereof**

(57)    A three dimensional microscope system having a microscope and an image processing apparatus for displaying an image by processing an image signal obtained by the microscope, comprises reflecting units which is provided so that first optical paths from an object are approximately symmetric, and objective lens which is provided so that second optical paths from the reflecting units are approximately symmetric, wherein shading data of each part of an image is measured when focal distance of the objective lens to an imaging surface is changed, focal position of the each part being detected, an all-in-focus image about depth of the object being formed in parallel with respect to time based on a pixel having a focused pixel value, contour images of the object being recognized and formed based on each all-in-focus image, and a three dimensional image being formed by synthesizing the recognized contour images.

EP 1 515 174 A2

**Description**

Technical Field of the Invention

The present invention relates to a three dimensional microscope system and an three dimensional image display method thereof.

Description of Related Art

In recent years, a microscope has been increasingly used for an operation such as manipulation of a gene or cell, or an assembly of a micro machine etc.. It is necessary for the operator to bring a lens into focus on an object in many instances since the operator works on the object, while looking at it via a lens. Thus, the operator brings the microscope into focus on the object by manually changing the focal distance of the microscope in vertical directions. The three-dimensional shape of the object is put in operator's mind by the operator who observes the image of each part of the object in vertical direction, which is obtained by the focal adjustment. The operator works on the object relying on the shape of the object built in his mind.

However, since this work requires time and a great labor, the efficiency of the operation is low, and considerable burden is on the operator. Moreover, the skill of the operator is also required in order to do such an operation.

When a person looks at things by his naked eyes, he or she automatically focuses his eyes on the things located near and far from him or her. This is because these eyes function as a variable focal mechanism, and the focused images of the things located far from or near him or her are automatically synthesized by his or her brain.

Accordingly, an all-in focus microscope attracts attentions as a microscope which is always in focus in an entire view without the focusing operation by the operator's eyes. As such an all-in-focus microscope, a microscope in which the entire object is focused by mechanically moving a lens is conventionally known.

Since in such a conventional image processing system, NTSC video signals from a camera is inputted in a PC (a computer) successively by a single ADC and the image data is stored in a memory in the PC, even if the video signals of an interlace are used, it is impossible to take in data at more than 30 frame/sec (frame rate).

In recent years, a vision chip has been developed in order to speed up an image input and processing. Specifically, a C-MOS vision chip which can read an arbitrary area on an image device has been developed briskly.

There are the following types of the structure of vision chips:

(1) Single ADC Architecture;
(2) Column Parallel ADC Architecture; and
(3) Pixel Parallel ADC Architecture

In the vision chip (1), the structure of the vision system is based on a PC, and has a problem that a sufficient band for data transmission cannot be secured.

The vision chips (2) and (3) have high data transmission band and high processing ability since image information can be in parallel taken and processed in the system. Since especially the vision chip (3) has the super parallel processing ability, data is transmitted and processed at a high-speed, but since the vision chip (3) has not crossed the stage of a trial production yet, it is difficult to secure sufficient image resolution.

Furthermore, in Japanese Laid Open Patent No. 06-308118, a cell positioning method is disclosed. The method comprises a step of, taking an image by a television camera, while observing a light image reflected from and transmitted to a sample comprising cells which emit fluorescence by giving fluorescein, and cells which do not emit fluorescence, by using fluorescence microscope, a step of distinguishing the cells which emit fluorescence from the cells which do not emit fluorescence by binary processing of a light image reflected from the scanned cells and storing the binary fluorescence image of the cells which emit fluorescence in a frame memory by an image analyzing apparatus, and a step of overlaying the binary fluorescence image and transmitted light image on a monitor or displaying these images side by side on the monitor.

Summary of the Invention

The inventor has filed Japanese Patent Application No. 2002-92349 filed on March 28, 2002 (Japanese Laid Open Patent No. 2003-287687 which is published on October 10, 2003), in which a three-dimensional transmission type microscope system, and image display method thereof capable of clearly displaying three dimensional transmission image of an object (sample) on a display are disclosed.

In addition, the inventor made research presentation about a real time all-in-focus microscope camera system as disclosed in Journal of the Robotics Society of Japan. volume 21, No.1 Page 43-44, which was published in November 2003. In the journal, the principle of the all-in-focus microscope camera is described in detail.

In an all-in-focus microscope camera system, an image (all-in focus image) which is focused at real time in the entire microscope field and depth data of an object can be simultaneously obtained.

The system according to the present invention, in place of a microscope image at a certain focal distance which is observed from only operation environment of the microscope image, it is possible to operate three dimension data configured in a computer and virtual three dimension display, using an all-in-focus image at all focal distances (all-in-focus image) while observing the object from an arbitrary view point without restraint.

In recent years, it is required to measure the volume of a cell, a DNA, or a connection portion of an IC chip while observing a microscopic image.

It is an object of the present invention to provide a three dimension microscope system (actual condition microscope) and a method for displaying an image which is capable of accurately measuring the volume of a tiny object such as a cell, DNA or a connecting portion of a semiconductor IC chip at approximately real time.

The theory of "Depth from Focus" for obtaining a three dimensional shape image will be outlined below.

In case of a microscope image, the shallowness of depth of the object affects greatly the operativity of the microscope. On the other hand, it means the sensitivity of "the degree of a focus" to the focal distance is high, and means that the focal distance at which an object is focused can be used for distance measurement of the object in a depth direction.

In the theory of the "Depth from focus", this relationship is used for measurement of three dimension shape in a positive manner. By using the all-in-focus microscope camera, it is possible to obtain not only an all-in-focus image but also three dimension shape image with the monocular according to the principle of "Depth from Focus."

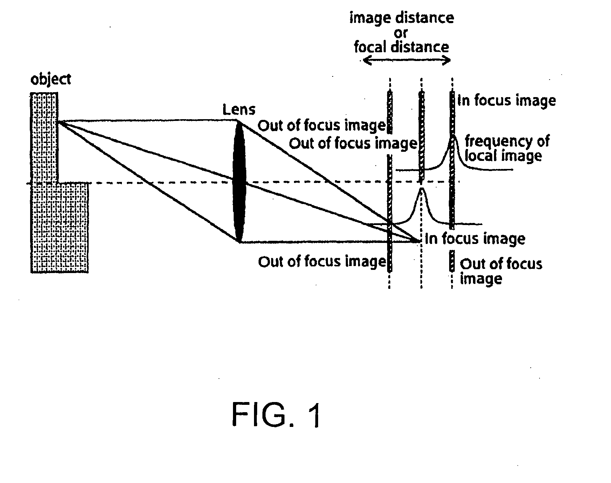

Fig. 1 is a diagram showing the principle of "Depth from Focus."

When observing an object with different depths, since an out-of-focused image, compared with an in-focused image, has the tendency that a high frequency component is lost, distribution of the shading data of the image at each point of the image is measured by changing distance (focus) to the imaging area, thereby detecting the focused position.

Once the distance to the imaging area at which the object is focused, is acquired, an all-in-focus image is obtained by collecting a focused pixel value, one pixel by one pixel, and a depth image is obtained by calculating the distance to the object using the basic formula (Gauss law of a lens) of optics.

In the present invention, one or two all-in-focus microscope cameras, based on the above-mentioned principle, are used so as to obtain all-in-focus images in parallel on the same time axis from two directions, and further depth images of the object in parallel. Depth images of an object which is a thing to be measured are acquired in parallel. The depth images which are in parallel in terms of time are processed so as to form two contour images which are in parallel in terms of time in order to form a three dimensional shape image(s) from these two contour images.

That is, the image display method according to the present invention, the optical paths from the object to the objective lens of the microscope are substantially (approximately) symmetric, and when focal distance of the objective lens to the imaging area is changed, shading data of each part of the image is measured by the image processing apparatus, and focus points are detected so as to form a series of images having different a focal point, thereby in parallel forming an all-in-focus image(s) in accord with the time axis of depth of the object based on pixels having a focus pixel value, and each contour image of the object is recognized based on each parallel all-in-focus images, thereby synthesizing the recognized two contour images into a three dimensional shape image.

Thus, the volume of the object is calculated from the three dimensional shape image.

Description of the Drawings

The present inventions will now be described by way of example with reference to the following Figures, in which:

Fig. 1 is a diagram showing theory of the "Depth from Focus" in an all-in-focus microscope;
Fig. 2 is a diagram showing the structure of a first embodiment;
Fig. 3 shows an cell observation and focus determination based on all-in-focus algorism;
Fig. 4 is a diagram showing the second embodiment according to the present invention;
Fig. 5 is a schematic block diagram of three-dimensional transmission type microscope system according to the present invention;
Fig. 6 is a functional block diagram mainly showing the function of a real time all-focal microscope;
Fig. 7 is a timing chart showing a scan-timing of a high-speed photography camera;
Fig. 8 is a schematic view explaining the structure and an operation of a camera sensor and camera output circuit of the high-speed photography camera;
Fig. 9 is a schematic functional block diagram explaining functions performed in an image-processing equipment;
Fig. 10 is a diagram showing a method of creating fluorescence image data;

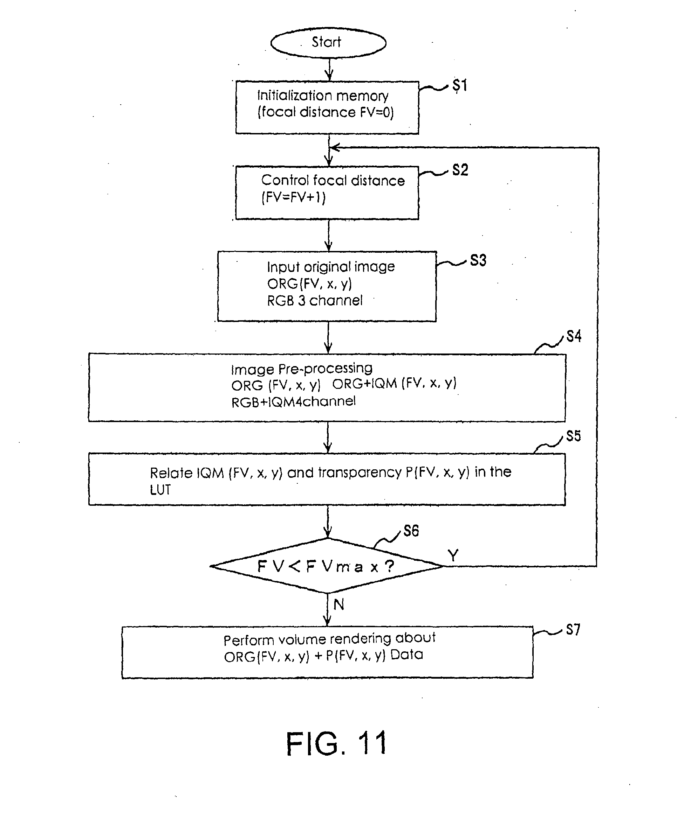

Fig. 11 is a flow chart showing an operation of the system according to the present invention;
Fig. 12 shows a series of microscope images taken while a focal distance is changed; and
Fig. 13 is a three-dimensional microscope image on which volume rendering was performed.

Detailed Description of the Invention

Hereafter, embodiments of the present invention will be described below, referring to drawings.

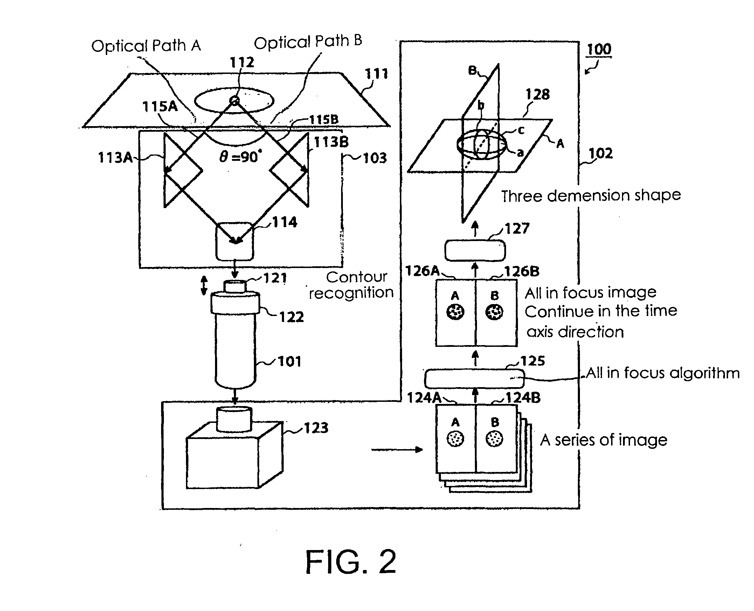

Fig. 2 shows the structure of a first embodiment according to the present invention.

In Fig. 2, a three dimension microscope system 100 comprises a microscope 101 which is an all-in-focus microscope described below, an image processing apparatus 102 and a symmetric optical path forming unit 103. As the microscope 101, for example, a transmission type microscope or reflective microscope may be adopted.

The optical path forming unit 103 is equipped with reflecting units 113A and 113B which comprises two prisms or two mirrors and are symmetrically provided adjacent to an object, such as a cell 112 placed on a measurement board 111, and a light conducting unit 114 such as a prism, half mirror or condense lens etc. for conducting, to an objective lens 121 of the microscope 101, light reflected by reflecting units 113A and 113B.

The reflective units 113A and 113B are arranged so that two optical paths 115A and 115B (optical path A, optical path B) from the cell 112 are provided, wherein parallaclic angle thereof is 90 degrees. Although the 90-degree parallaclic angle arrangement described later makes the formation of three dimension shape image easy, in the present invention, the parallaclic angle is not limited to 90 degrees. Three to five degree arrangement is also possible, and the parallaclic angle may be set to from the range of 3-5 degrees to 90 degrees.

In case of a binocular vision, it is important to obtain an image with a couple to several dozen parallaclic angle in order to obtain a three dimension view. For example, in order to measure the volume of a cell by the system, it is possible to configure a system for measuring the volume of the cell from contour lines of the left and right images by obtaining left and right image with 90 degree parallaclic angle.

It is possible to configure a actual condition microscope with high magnification by projecting left and right images to the left and the right eyes of a viewer respectively, that is, a microscope system capable of obtaining a depth image from difference between the left and right images.

The microscope 101 is equipped with the objective lens 121 and a piezo actuator 122, and is oscillated up and down with respect to the cell at high speed.

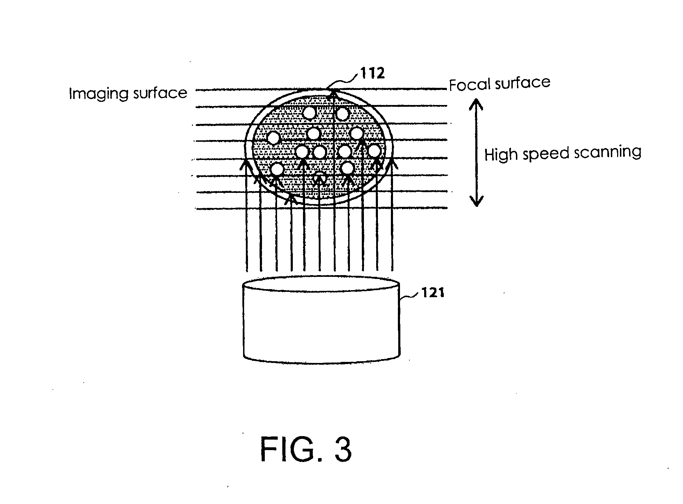

Thus, as shown in Fig. 3, a focal distance is changed at high speed with respect to the cell 112, and image signals are in parallel acquired at each different focal distance so as to obtain two or more sheet image signals. In this case, distribution of shading data is measured at each point of the image. This is for obtaining an all-in-focal image(s) by collecting an in-focus pixel value at every pixel.

In addition, although it is described as "all-in focus", it means that the all the image is substantially (approximately) and or practically in-focused and the present invention is not limited to "all" the image.

The image processing unit 102 has a high speed camera 123. The high speed camera 123 acquires information in a depth direction and the image which is in-focus on the entire portion of the object by taking an image at each different focal distance in order to obtain two or more images and to process it at a high speed.

With such operation, a plurality of images, for example, 900 images including out-of focus images at different focal distances are obtained, for example, series of different images (A, B) (for example 30 images each) 124A and 124B respectively. The all-in-focus images 126A and 126B that are in series in the time direction and in parallel are obtained by all-in-focus algorithm 125.

As described above, as shown in the principle figure of "Depth from Focus" (Fig. 1), when observing an object with different depths, since there is a tendency that an out-of-focus image loses a high frequency component as compared with an in-focus image, in-focus position is detected by changing focal distance to the imaging area and measuring distribution of shading image data at each part of the image. When distance to the imaging surface, at which an image is in focus is acquired, an all-in-focus image is obtained by collecting a focused value for each pixel, and the distance to the object is calculated by using the basic formula in optics (Gauss law of lens) so as to obtain an depth image in parallel.

The contour of the cell 112 is recognized from the depth image respectively by a contour recognition unit 127, which is part of a CPU, and the images A and B are displayed as two contour images a and b by a processing unit 128, and synthesized according to a certain method so as to be displayed as an image having contour c which is approximated to a three dimension shape image. From the contour c, the volume of the cell 112 is computed immediately and will be measured.

As mentioned above, in the microscope 101 of a three dimensional microscope system 100 which comprises the microscope 101 and the image processing apparatus for displaying an image by processing image signals obtained by the microscope 101, the reflecting units 113A and 113B are disposed so that the optical paths 115A and 115B from the cell 112 which is an object to be observed are substantially (approximately) symmetric, and, the objective lens 121 is disposed so that the optical paths 115A and 115B from the reflective units to the objective lens 121 through the reflecting units 113A and 113B are substantially symmetric. Further, when focal distance of the objective lens 121 to the imaging surface (refer to Fig. 3) is changed, shading data of each point of the image is measured so that an in-focus position of the focused image is detected and different series of images 124A and 124B are formed by the image processing apparatus. Then, all-in-focus images 126A and 126B are formed in parallel on the same time axis with respect to depth of the object based on pixels having a focused pixel value. Based on each all-in-focus image, images a and b, in each of which the contour of the object is recognized are formed in order to synthesize the contour recognized images a and b thereby forming a three-dimensional image c.

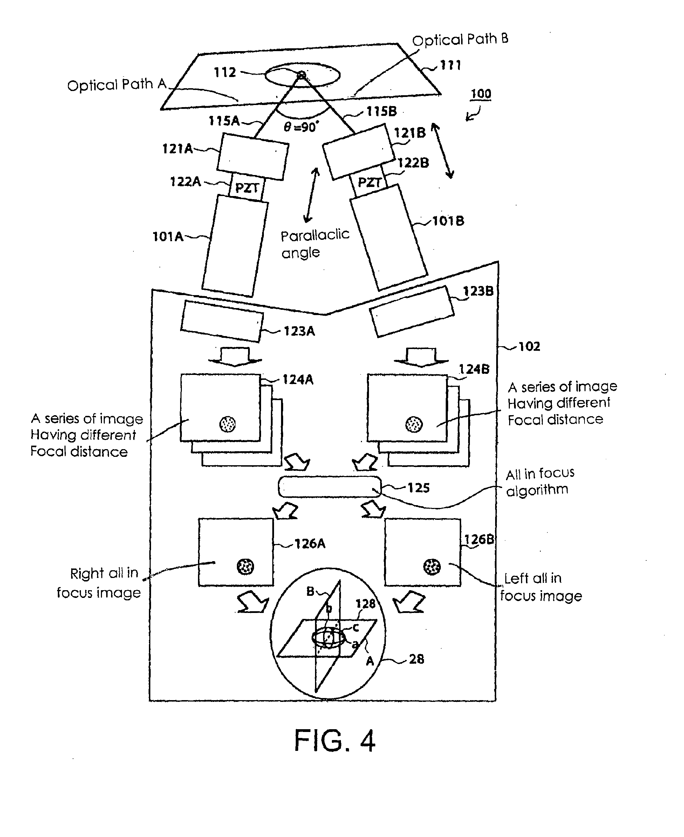

Fig. 4 shows a second embodiment according to the present invention. In case that components of the second embodiment are the same as those of the first embodiment, the same numbers are used in description of the second embodiment, and explanation thereof is omitted.

In this embodiment, two microscopes 101A and 101B are symmetrically disposed to the cell 223. Therefore, light which passes through the two optical paths 115A and 115B is introduced into objective lenses 121A and 121B of respective microscopes 101A and 101B.

In this case, since the two microscopes 101A and 101B are used, the reflective units 113A and 113B in the first embodiment are not needed.

Although while in the first embodiment a single high speed camera 123 is used, in the second embodiment the two microscope 101A and 101B and two high speed cameras 123A are used, the image processing apparatus 102 of the second embodiment is substantially the same as that of the first embodiment.

In this example, using the two all-in-focus microscopes which are microscopes 101A and 101B are used so that right and left all-in-focus images are obtained and these images are put into the right and left eyes of an observer respectively, thereby realizing an actual condition microscope with high magnification, which was deemed to be difficult to realize.

In an actual condition microscope with the conventional low magnification, since the depth of field of an object is large to some extent, an image focused to left and right eyes are acquired to extent that they are viewed with both eyes.

In terms of high magnification, since the depth of field of an object are small, only small portions in either the left image or right image are in focus, as a result, it cannot been seen as three dimensional image so that conventionally, the actual condition microscope with high magnification did not exist. Thus, the actual condition microscope with high magnification is realized by these embodiments of the present invention.

In the all-in-focus microscopes, while piezo actuators 122A and 122B are shaken, a couple of dozen images are taken in at high speed in order to synthesize images having different focal distance thereby acquiring all-in-focus images in real time (30fps).

Two systems thereof are used to obtain right and left all-in-focus images with a couple of degree to several dozen degree parallaclic angle which is necessary to obtain binocular vision in a actual condition microscope thereby realizing the actual condition microscope with high magnification by giving these images to left and right eyes respectively.

Since it is advantageous to use two all-in-focal microscopes, even in a single all-in-focus type system of the first embodiment, the same system as that of the second embodiment is configured by disposing an optical system between the objective lens and the object, and providing an optical system capable of configuring an optical system in which left and right images are obtained for one image.

As mentioned above, in the three dimensional microscope system 100 comprising microscopes 101 (101A and 101B) and the image processing apparatus 102 for displaying an image by processing image signals obtained by the microscopes 101 (101A and 101B), the two microscopes 101A and 101B having respective objective lenses 121A and 121B in which the optical paths 115A and 115b from the cell 112 which is an object to be observed are substantially symmetric are provided. Further, when focal distance of the objective lenses 121A and 121B to the respective imaging surfaces is changed, shading data of each point of the images is measured so that an in-focus position of an focused image is detected at each part, and series of images 124A and 124B having a different focus point are formed by the image processing apparatuses 102A and 102B. Then, all-in-focus images 126A and 126B are formed in parallel on the same time axis with respect to depth of the object based on pixels having a focused pixel value. Based on each all-in-focus image, images a and b, in each of which the contour of the object to be observed is recognized, are formed in order to synthesize the contour recognized images a and b thereby forming a three-dimensional image c.

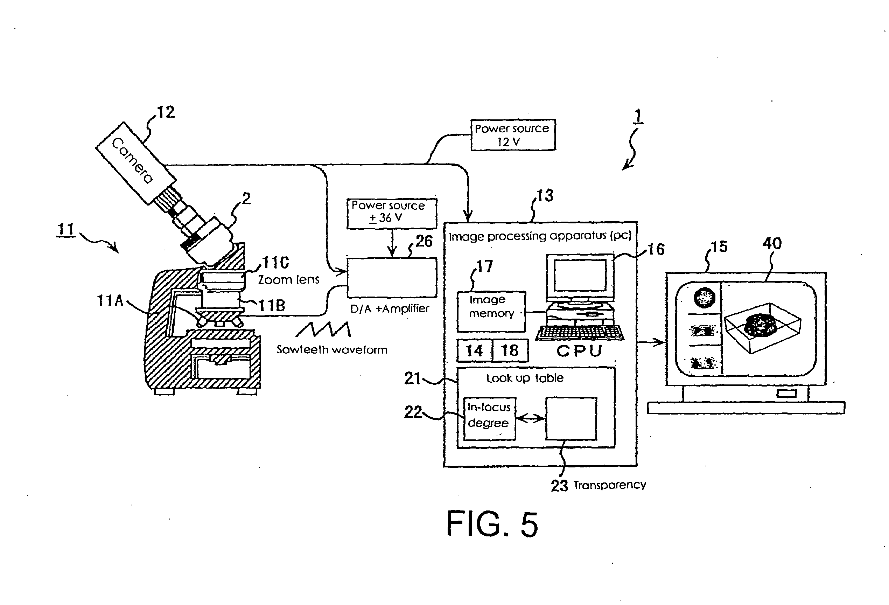

All-in-focus microscope which is used in the present invention will be described below referring to Figs. 5 to 10.

In this embodiment, as an example, a transmission type microscope is described as an all-in-focus microscope. However, the present invention is not limited to the transmission type microscope, and other microscope may be used.

Fig. 5 is a schematic block diagram of a three-dimensional transmission type microscope system according to the present invention.

The transmission type microscope 2 which corresponds to the transmission type microscopes 101 (101A and 101B) shown in Figs. 2 and 4, has an optical system 11 that receives reflected light from an object OB, and a high-speed scanning camera 12 (that comprises the camera head of the transmission type microscope 2) as a high-speed scanning device to which the optical system 11 is attached. An image processing apparatus 13, connected to the three-dimensional transmission type microscope 2, takes in data scanned by the high-speed scanning camera 12 which corresponds to the high speed camera 123 (123A and 123B) shown in Figs. 2 and 4, processes the scanned data at high speed, and generates all-in-focal images. Although, in Figs. 1 and 4, the high speed camera is included in the image processing apparatus, it is not included in the following description.

The image processing apparatus 13 connected to an image display device 15 has a CPU as a processing equipment 16 and an image memory 17. The processing apparatus 16 may be used as the image display device 15. In this embodiment, both image display device 15 and the processing apparatus 16 are shown in the Fig. 1 for convenience.

The image processing apparatus 13 has a RGB output board 14 which performs color processing to the all-in-focal images that the image processing apparatus 13 has generated, and an in-focus degree output board 18 that is used with the RGB output board 14.

Moreover, the microscope is equipped with a focal distance changing device 26. The optical system 11 has a variable focal mechanism 11A and zoom lens(es) 11C and 11B.

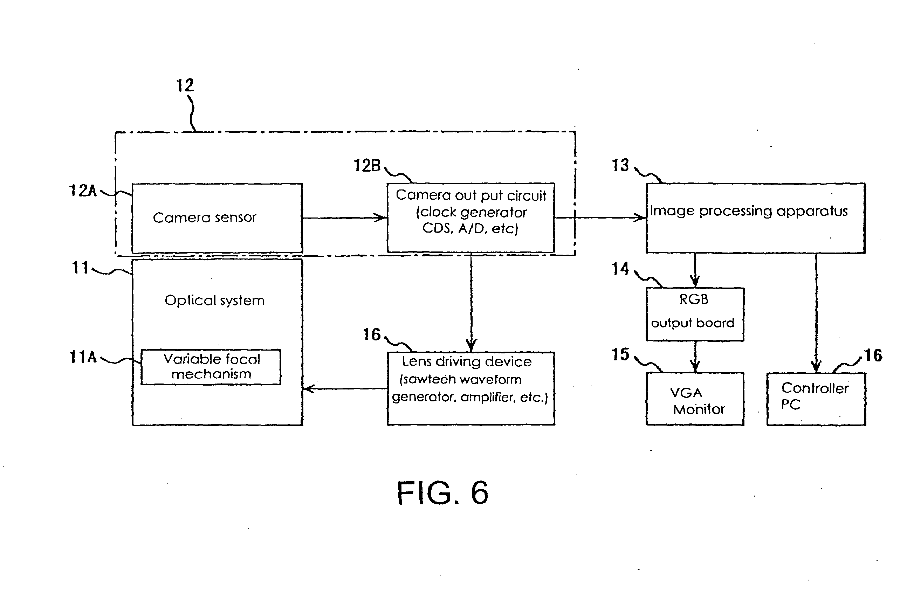

In Fig. 6, a functional block diagram mainly showing function of the three-dimensional transmission type microscope system 1 is shown.

The high-speed scanning camera 12 is equipped with a camera sensor 12A and a camera output circuit 12B that processes output signals of the camera sensor 12.

As mentioned above, the optical system 11 is equipped with the variable focal mechanism 11A for positioning the optical system 11, in order, from the side near the object OB, the lighting system 11B, and the zoom lens 11C. The variable focal mechanism 11A is provided on the top portion of the macro zoom lens 11C through the lighting system 11B. Thereby, the variable focal mechanism system which changes the original optical characteristic (focal distance) of the macro zoom lens at a high speed is acquired.

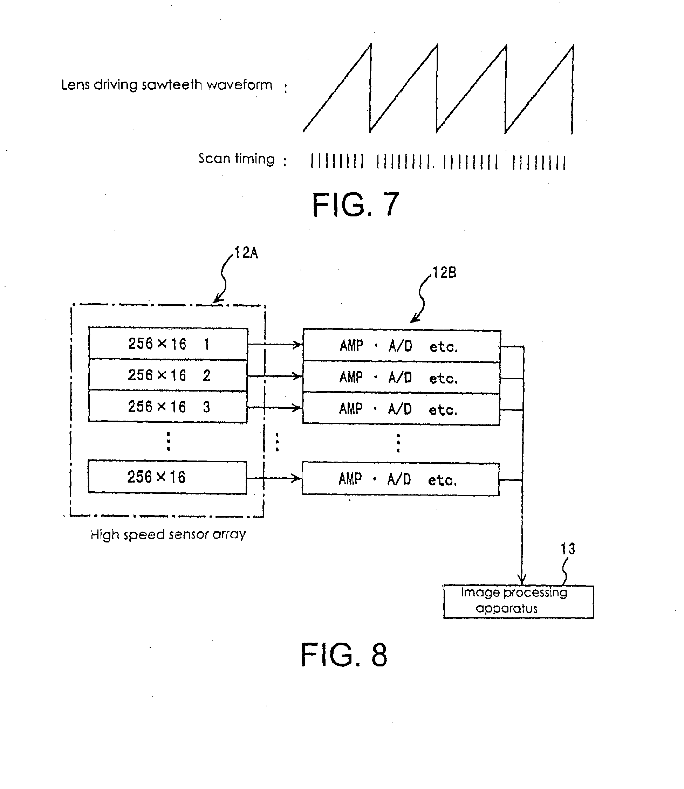

As mentioned above, Fig. 7 is a timing chart showing driving timings at which the focal distance changing device 26 drives the variable focal mechanism 11A. It is controlled to photo (scan) the object OB eight (8) times for every focal distance synchronizing with a 30Hz sawtooth waveform, as shown in Fig. 7. The sawtooth wave is generated by the focal distance changing device 26 using the synchronized signals sent from the camera output circuit 12B of the high-speed scanning camera 12.

Since there is hysteresis characteristic in the variable focal mechanism 11A, the hysteresis is surely reset for every waveform (every scanning). Before the high-speed scanning camera 12 is described, the various techniques of the high-speed scanning method are described below.

The frame rate of the high-speed scanning camera is usually increased by one of the following methods or the combination thereof:

> (1) accelerating a reading clock of a sensor;
> (2) reducing the number of reading pixels; and
> (3) parallelizing reading pixels.

Although in the first method, it is easy to understand improvement in the speed of pixel rate theoretically, there is a limit in the improvement in the speed from the characteristic of a sensor device, or the conditions of circumference circuits.

Moreover, in the second method, the technique of reducing the number of reading pixels is accomplished by, for example, reading by only 250 x 250 pixels by a sensor which can read 500 x 500 pixels by 30 frames and processing the next frame. In the method, it is possible to speed up 4 times as fast as 500 x 500 pixels scanning, which can create 120 (= 30 x 4) frames. In this case, resolution becomes low.

In the third method, the Parallelization of the reading pixel is performed in various modes.

For example, there is the technique of parallelizing the high-speed image sensor itself, thereby parallelizing a pixel area which forms the scanning area. For example, as shown in Fig. 8, the high-speed camera ("ULTIMA" Series manufactured by PHOTRON LTD.) has an array of 16 independent high-speed sensors (each of which has 256 x 16 pixels) that are in parallel arranged, and these sensors forms a scanning area of 256 x 256 pixels as a whole. From each high-speed sensor data is read at 25 MHz.

In this embodiment, the third technique of parallelization mentioned above is used for the camera sensor 12A of the high-speed scanning camera 12. As shown in Fig. 8, the high-speed image sensors for scanning are provided in an arrangement of array. In addition, this high-speed scanning camera 12 may be structured using the 2nd technique mentioned above or the combination of the 2nd and the 3rd techniques.

In addition, as the 3rd technique for parallelization of pixels to be read, there are various modes in addition to the system in that two or more high-speed sensors are arranged at the form of an array as mentioned above.

As one example, a pixel area (for example, 256 x 256 pixels) of one sheet forming a scanning area can be divided vertically and horizontally into two or more areas(for example, four areas), and pixel data can be simultaneously read in parallel from each divided area, thereby the system can accelerate reading speed.

Moreover, as another example, the pixel data for two or more lines (for example, two lines: each line, for example, comprises 256 pixels) from the pixel area of one sheet is simultaneously read in parallel, and this operation is performed one by one about all lines, thereby the system can accelerate reading speed.

Furthermore, as another example, pixel data can be simultaneously and in parallel read from two or more pixels (for example, 10 pixels) from a line (for example, 256 pixels) which constitutes the pixel area of one sheet, thereby the system can accelerate reading speed by repeating this operation successively about the line and remaining lines.

The camera output circuit 12B is equipped with the processing circuit section having circuits, such as an amplifier, a CDS (Correlated Double Sampling) circuits, and an A/D converter, corresponding to each sensor in addition to a clock generator. For this reason, in the camera output circuit 12B, image data from the camera sensor 12A is amplified, CDS-processed, and digitized for every processing circuit section. Data outputted from this camera output circuit 12B is transmitted to the image processing apparatus 13 by the LVDS (Low Voltage Differential Signaling) method.

The image processing apparatus 13 has hardware logic according to a high-speed large capacity FPGA (Field Programmable Gate Array). This image processing apparatus 13 includes an FPGA, mass SDRAM, and an LVDS interface on its board, and can interface with external apparatuses. The value of in-focus degree IQM (Image Quality Measure) is evaluated for every pixel of the image data taken in by the image-processing apparatus 13 while moving the focal distance of variable focal mechanism 11A.

As described above, according to the "Depth from Focus" theory, whether it is in focus is decided by local space frequency analysis of that image, that is, it is decided that it is in focus at the focal distance at which the frequency reaches to its peak. It is intuitively inferred that portions which are out of focus have low frequency and portions which are in focus have high frequency. Images are captured one by one as focal distance of the lens is changed by the variable focal mechanism 11A. The local space frequency analysis of each picture is performed about the image, and the image portion having the peak of frequency, i.e., the in-focus portion (or portions) is taken up from each image in a pixel unite, and these image portions extracted are synthesized as a sheet of an image, thereby obtaining an all-focal image.

Moreover, the three-dimensional data of the object OB which is reflected in the all-in-focal image is also obtained at those focal distances.

The local space frequency analysis of each pixel can be evaluated by spatial distribution of an image shading value defined by IQM (Image Quality Measure) of the following formula:

$$IQM = \frac{1}{D} \sum_{x=xi}^{xf} \sum_{y=yi}^{Yf} \left\{ \sum_{p=-Lc}^{Lc} \sum_{q=-Lr}^{Lr} \left| I(x,y) - I(x+q, y+p) \right| \right\} \qquad (1)$$

Here, (-Lc, -Lr) - (Lc, Lr) and (xi, yi) - (xf, yf) represent the small areas for performing distribution evaluation and smoothing, respectively. D represents the number of all the pixels which is evaluated for normalizing them per pixel.

Therefore, as the focal distance is changed by the variable focal mechanism 11A, the value of IQM is evaluated for each pixel or each area, the peak of an IQM value is detected, and the object distance X then computed from the pixel shade value f and the image distance x is substituted for the matrix element to each pixel position, respectively. After this processing is performed at each focal distance, each matrix becomes an all-in-focus image and a depth image.

If this processing of IQM is simplified, it will become a Laplacian 3-dir filter and a 2 x 2 smoothing filter.

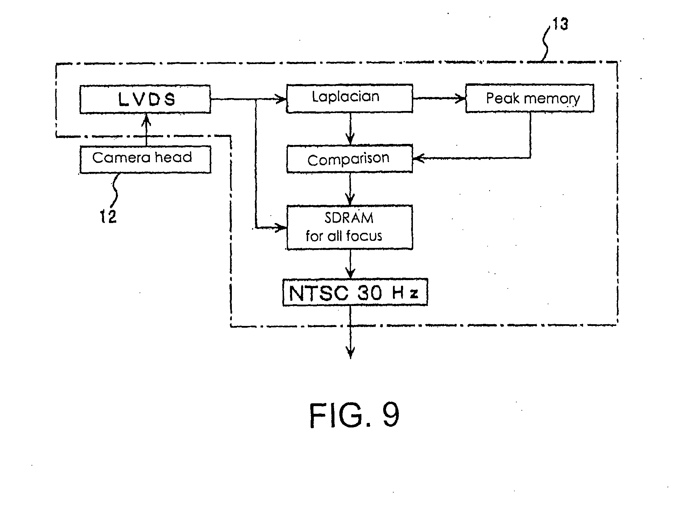

As shown in Fig. 9, it is possible to simplify such image processing by the image processing apparatus 13. That is, in a Laplacian circuit, analysis of space frequency is performed as to the 80MHz image signals sent from the high-speed scanning camera 12, and the result of the analysis is recorded on a peak memory. The output of the Laplacian circuit is compared with a reference value or peak value stored in the peak memory, and if it is the peak value, i.e., the image is in focus, it is recorded in the frame memory in SDRAM. The other outputs data is deleted.

Thus, the processed image data stored in the SDRAM is sent in the form of standard NTSC signals at frame rate 30Hz, to the monitor 15 through the RGB output board 14, and is displayed as a real time all-focal image.

Moreover, the three-dimensional data which consists of a focal distance is converted to LVDS, and is transmitted to the processing equipment 16.

Thus, in this embodiment, a camera image can be obtained by the three-dimensional transmission type microscope which is a real time all-focal type, and an operator does not need to imagine the three-dimensional shape of an object in mind.

Since the entire view is in focus, it is not necessary to change the focal distance of the camera. And a "live (real time)" image is obtained. That is, there is little delay to display the image within a viewer, and a motion is almost real-timely viewed as it is. Thereby, the efficiency of work is improved sharply by using the microscope camera.

As compared with the conventional all-focal microscope cameras using a system with which the focus of a lens is adjusted mechanically, the validity of the all-focal microscope camera is conspicuous. Since in the conventional all-focus microscope, an operation of adjusting a focus mechanically, and a subsequent processing operation in the conventional case are necessary, it takes several seconds to several minutes to obtain one screen. Although a still image is obtained by using a 30 frame conventional video camera, the live motion picture was impossible. Since an operation while looking into a microscope is delayed where an image is refreshed only once at several seconds, actual work using such a microscope is almost impossible. The frame frequency of a motion picture which a person can regard as one without breaks is 30 or more frames per second. The frame taking-in speed of the real time all-focal microscopes according to the present invention is 240 frames/second. That is, since a focus is continuously changed 8 times for 1/30 seconds, taking in images, the taking-in speed is 240 (= 30 x 8) frames/second.

Thereby, it is possible to secure the real time nature as if the person looks at things ordinarily (without a microscope).

Moreover, although a person can look at things with a real time all focus in the world of a normal size, it is necessary to, in the micro world, use a real time single focus microscope. For this reason, in an operation using the conventional microscope, for the operator, complicated motions to adjust a focus is required. These real time all-focal microscope cameras according to the present invention enable it to treat the micro world like the world of the ordinary size.

Moreover, in the conventional operation, since a single focus microscope is used, it is required to prepare a section of a thing in order to see the thing under a microscope. In some cases, the section is not required if the all-focal microscope according to the present invention is used.

Furthermore, motions of the very small micro machine and ecology observation of the micro living things which have not been seen until now is also attained with these real time all-focal microscope cameras.

Next, by using data of four channels of RGB+IQM which is added the IQM image indicating an in-focus degree in each pixel position at each focal distance to the image (in the case of a color three channels of RGB), a series of processing is performed about all-in-focal images (images that are in focus anywhere), and depth images, that is, images of the inside of an object, to display the images.

The technology which displays the inside of an object by four channels of RGBP which added transparency P of the object to 3 RGB channels of each slice image is used as volume rendering technology which displays three-dimensional CG.

For example, a P value of glass is high, an opaque object is set as a low P value, and frosted glass has a middle value.

As shown in Fig. 5, by relating, in the look-up table 21 (a memory means, or memory storage), in-focus degree IQM 22 and the transparency P 23 used for volume rendering technology, it is possible to display volume rendering images, based on a series of images obtained while the focal distance is changed. Thereby, it is possible to observe the inside of the object like an MRI image. Furthermore, it is possible to display the slice image in the arbitrary direction (such as a vertical direction or horizontal direction but not limited to these directions).

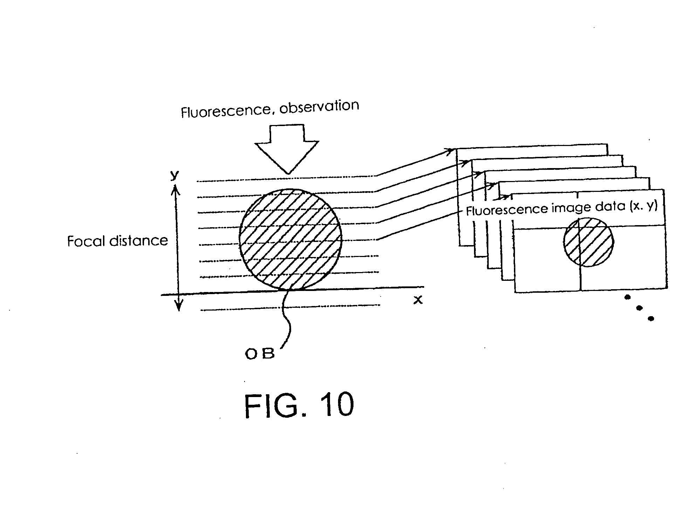

As shown in Fig. 10, if a transmission type fluorescence microscope emits light of a certain wavelength on an object OB (a sample), fluorescence image data (x y) corresponding to focal distances is obtained. Thereby, it is possible to observe a gene, functional protein, etc. Especially at the present when DNA and RNA analysis is progressed to some extent, since it is known that the protein structure greatly affects functions of enzyme etc., functional structure analysis is advanced. In the case of this fluorescence microscope, in the above-mentioned algorithm, it is possible to observe the three-dimensional structure of the fluorescent substance by relating the objective degree of fluorescence instead of in-focus degree to the transparency P.

For example, where neuron reaction of human's brain is observed in real time, three to four images are refreshed during neuron reaction time (3 to 4 milliseconds).

A flow chart is shown in Fig. 10.

Memory initialization (focal distance FV = 0) is performed (S1). Focal distance control (FV = FV + 1) is performed (S2), and an original image ORG of the RGB 3 channel (FV, x, y) is generated (S3). An IQM channel is added to the three RGB and image pretreatment by four channels is performed (S4).

$$ORG(FV, x, y) \rightarrow ORG + IQM\ (FV, x, y)$$

IQM (FV, x, y) and Transparency P (FV, x, y) are related to each other in look-up table 21 LUT (S5). It is determined if FV < FVmax (S6). If FV is less than FVmax, a focal distance is changed and the above-mentioned step is repeated. If FV is more than FVmax, a volume rendering is performed about ORG(FV, x, y) + P(FV, x, y) data (S7), and an image is displayed on the screen display.

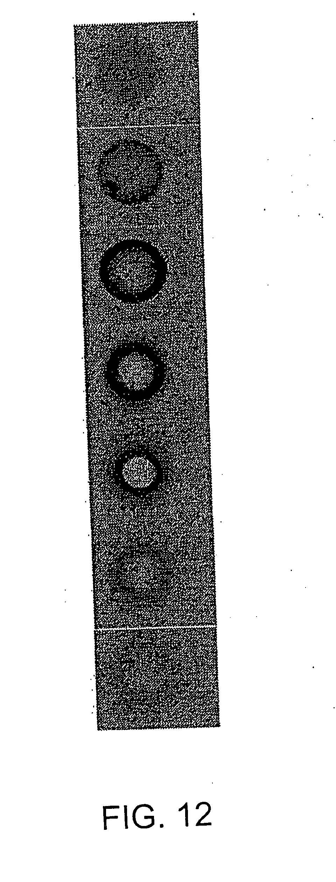

Fig. 12 shows sliced images obtained while the focal distance was changed.

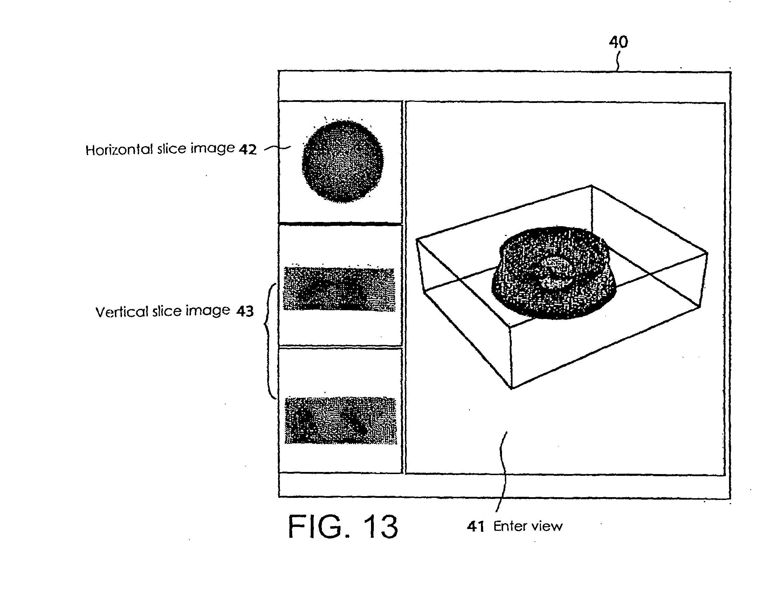

In Fig. 13, like an MRI image, the entire view 41 of a three-dimensional microscope image to which volume rendering is performed, is shown on the display screen 40. Also, the horizontal slice image 42 and vertical slice image 43 are shown on the display screen 40.

According to the present invention, it is possible to three-dimensionally acquire depth data of tiny object such as a cell, a DNA or a semi-conductor IC chip three dimensional data, and it is possible to provide a three dimensional microscope (actual condition microscope system) and an image display method using the system capable of measuring the volume of the object accurately and at real time.

Thus the present invention possesses a number of advantages or purposes, and there is no requirement that every claim directed to that invention be limited to encompass all of them.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. A three dimensional microscope system having a microscope and an image processing apparatus for displaying an image by processing an image signal obtained by the microscope, comprising:

   reflecting units which is provided so that first optical paths from an object are approximately symmetric, and objective lens which is provided so that second optical paths from the reflecting units are approximately symmetric,

   wherein shading data of each part of an image is measured when focal distance of the objective lens to an imaging surface is changed, focal position of the each part being detected, an all-in-focus image about depth of the object being formed in parallel with respect to time based on a pixel having a focused pixel value, contour images of the object being recognized and formed based on each all-in-focus image, and a three dimensional image being formed by synthesizing the recognized contour images.

2. A three dimensional microscope system having a microscope and an image processing apparatus for displaying an image by processing a image signal obtained by the microscope, comprising:

   two microscopes in which objective lenses are provided so that optical paths from an object are approximately symmetric,

   wherein shading data of each part of an image is measured when focal distance of the objective lenses to an imaging surface is changed, focal position of the each part being detected, an all-in-focus image about depth of the object being formed in parallel with respect to time based on a pixel having a focused pixel value, contour images of the object being recognized and formed based on each all-in-focus image, and a three dimensional image being formed by synthesizing the recognized contour images.

3. An image display method according to a three dimensional microscope system having a microscope and an image processing apparatus for displaying an image by processing an image signal obtained by the microscope, wherein reflecting units and objective lenses are provided so that optical paths from an object to the objective lenses are approximately symmetric, the image display method comprising the following steps of:

   measuring shading data of each part of image when focal distance of the object to an imaging surface is changed,
   detecting focused position of the each part,
   forming each all-in-focus image about depth of the object in parallel with respect to time based on a pixel having focused pixel value,
   forming contour images of the object being based on each all-in-focus image, and
   forming a three dimensional image by synthesizing the recognized contour images.

4. The image display method according to claim 3, further including, calculating volume of the object based on the three dimensional image.

5. An image display method according to a three dimensional microscope system having two microscope and at least one image processing apparatus for displaying an image by processing an image signal obtained by the microscope, wherein in the two microscopes, objective lenses are provided so that optical paths from an object are approximately symmetric, the image display method comprising the following steps of:

measuring shading data of each part of image when focal distance of the object to an imaging surface is changed,
detecting focused position of the each part,
forming each all-in-focus image about depth of the object in parallel with respect to time based on a pixel having focused pixel value,
forming contour images of the object being based on each all-in-focus image, and
forming a three dimensional image by synthesizing the recognized contour images.

## FIG. 1

FIG. 2

FIG. 3

Optical Path B

112

111

Optical Path A

100

115A    115B    121B

θ=90°

121A

122A    PZT    PZT    122B

101A    101B

Parallaclic
angle

123B

123A    102

124A    124B

A series of image
Having different
Focal distance

A series of image
Having different
Focal distance

125    All in focus
algorithm

126A    126B

Right all in
focus image

Left all in
focus image

B    128

b    c

a

A    28

**FIG. 4**

FIG. 5

## FIG. 6

12

12A — Camera sensor

12B — Camera out put circuit (clock generator CDS, A/D, etc)

13 — Image processing apparatus

11 — Optical system

11A — Variable focal mechanism

16 — Lens driving device (sawteeh waveform generator, amplifier, etc.)

14 — RGB output board

15 — VGA Monitor

16 — Controller PC

EP 1 515 174 A2

16

Lens driving sawteeth waveform :

Scan timing : ||||||||  |||||||||.  ||||||||  ||||||||

# FIG. 7

12A

12B

| 256 × 16   1 |
| 256 × 16   2 |
| 256 × 16   3 |
| ⋮ |
| 256 × 16 |

| AMP · A/D  etc. |
| AMP · A/D  etc. |
| AMP · A/D  etc. |
| ⋮ |
| AMP · A/D  etc. |

High speed sensor array

13

Image processing apparatus

# FIG. 8

FIG. 9

FIG. 10

Start

↓

Initialization memory
(focal distance FV=0) ⟋S1

↓

Control focal distance
(FV=FV+1) ⟋S2

↓

Input original image
ORG(FV, x, y)
RGB 3 channel ⟋S3

↓

Image Pre-processing
ORG (FV, x, y)　ORG+IQM (FV, x, y)
RGB+IQM4channel ⟋S4

↓

Relate IQM (FV, x, y) and transparency P(FV, x, y) in the
LUT ⟋S5

↓

⟨ FV < FVmax ? ⟩ ⟋S6 　Y

↓N

Perform volume rendering about
ORG(FV, x, y) + P(FV, x, y) Data ⟋S7

# FIG. 11

FIG. 12

Horizontal slice image **42**

Vertical slice image **43**

FIG. 13

**41** Enter view

EP 1 515 174 A2